# EUROPÄISCHE PATENTANMELDUNG

(11) **EP 1 098 077 A2**
(43) Veröffentlichungstag der Anmeldung: **09.05.2001**
(21) Anmeldenummer: 00810996.9
(22) Anmeldetag: 25.10.2000
(51) Int. Cl.: F02C 3/28, F02C 6/00

(54) **Verfahren zum Betrieb einer Kraftwerksanlage**

(30) Priorität: 03.11.1999 DE 19952885
(71) Anmelder: ALSTOM Power (Schweiz) AG, 5401 Baden (CH)
(72) Erfinder: Frutschi, Hans Ulrich, 5223 Riniken (CH)

(57) **Zusammenfassung**

Eine Gasturbogruppe mit sequentieller Verbrennung (1) wird mit einem zur Synthesegaserzeugung geeigneten Abhitzekessel (2) versehen. Die Gasturbogruppe arbeitet dann mit chemischer Rekuperation der Abgaswärme. Mit einer solchen Kraftwerksanlage lassen sich Wirkungsgrade erzielen, die nahe an diejenigen von Kombianlagen heranreichen. Beste Wirkungsgrade werden dann erzielt, wenn bei einer Gasturbogruppe mit sequentieller Verbrennung das Reaktorgas (55) zu einem möglichst grossen Teil in einer Brennkammer (12) einer höchsten Druckstufe verfeuert wird. Um eine gewisse Umsetzungsrate von kohlenwasserstoffhaltigem Rohbrennstoff (53) und überhitztem Dampf (52) in Synthesegas zu erreichen, muss der Reaktor (22) auf eine Mindesttemperatur gebracht werden, die oberhalb der Temperatur des entspannten Arbeitsmediums (66) der Gasturbine liegen kann. Diese Temperaturerhöhung kann durch eine Zusatzfeuerung (3) gewährleistet werden. Die Zusatzfeuerung kann auch zum Start der Synthesegasproduktion verwendet werden, wenn eine Startlufteinrichtung (49, 68, 103) vorhanden ist.

## Beschreibung

### Technisches Gebiet

Die Erfindung betrifft ein Verfahren zum Betrieb einer Kraftwerksanlage, welche Kraftwerksanlage wenigstens eine Gasturbogruppe mit wenigstens einer Brennkammer einer höchsten Druckstufe und wenigstens einer Brennkammer wenigstens einer niedrigeren Druckstufe beinhaltet, und bei welchem Verfahren ein Heissgas aus einer Brennkammer einer höheren Druckstufe zunächst in einer Turbine unter Abgabe mechanischer Leistung entspannt und in eine Brennkammer einer niedrigeren Druckstufe eingeleitet wird, wobei ein entspanntes Heissgas der Gasturbogruppe einen Abhitzekessel durchströmt, in welchem Abhitzekessel eine Dampfmenge erzeugt wird, diese Dampfmenge in einen im Abhitzekessel eingebauten Reaktor eingeleitet wird, in welchen Reaktor weiterhin eine Menge eines kohlenwasserstoffhaltigen Rohbrennstoffes eingeleitet wird, und wobei in dem Reaktor aus der Dampfmenge und dem Rohbrennstoff ein wenigstens teilweise aus Synthesegas bestehendes Reaktorgas erzeugt wird, welches Reaktorgas wenigstens teilweise in wenigstens einer Brennkammer der Gasturbogruppe verbrannt wird.

### Stand der Technik

Es ist bekannt, die hohen Abgastemperaturen von Gasturbogruppen zur Erzeugung von Synthesegas zu nutzen. Dabei wird in einem Abhitzekessel durch die Abgaswärme der Gasturbogruppe Wasser verdampft. Der so entstandene Dampf wird in einem ebenfalls von dem Abgas der Gasturbine beheizten Reaktor mit einem kohlenwasserstoffhaltigen Rohbrennstoff, beispielsweise Erdgas, vermischt. In dem Reaktor entsteht bei hinreichend hoher Temperatur aus dem Rohbrennstoff und dem Dampf ein niederkalorisches Synthesegas, welches als wesentliche Bestandteile die Komponenten Dampf, Wasserstoff, nicht umgesetzter Rohbrennstoff, Kohlendioxid und Kohlenmonoxid enthält. Aus dem Reaktor tritt ein Reaktorgas aus, welches in unterschiedlicher Zusammensetzung aus Synthesegas, Rohbrennstoff und unverbrauchtem Dampf besteht, und welches in einer Brennkammer der Gasturbogruppe verbrannt werden kann. Die Verbrennung solcher niederkalorischen Gase bietet Vorteile hinsichtlich der Schadstoffemissionen, insbesondere der Stickoxide, da die Flammentemperaturen niedrigerer sind. Der hohe Wasserstoffanteil gewährleistet dabei eine stabile Verbrennung. Aufgrund des grossen Ballaststoffanteils im Reaktorgas ergeben sich hohe Brennstoffmassenströme, und damit hohe spezifische Leistungen der Gasturbogruppe.

Derartige Kraftwerksanlagenanlagen mit chemischer Rekuperation der Abgaswärme bieten hohe Wirkungsgrade. Eine weitgehende Umsetzung von Rohbrennstoff und Dampf in Synthesegas erfordert allerdings ein vergleichsweise hohes Temperaturniveau. Dies ist gerade im Abgas von modernen Gasturbogruppen mit sequentieller Verbrennung, die mehrere Brennkammern auf unterschiedlichen Druckstufen aufweisen, zumindest näherungsweise gegeben. Eine im Einzelfall notwendige Zusatzfeuerung stromauf des Abhitzekessels, um die notwendige Reaktortemperatur zu erreichen, kann klein dimensioniert werden. Dies macht den praktischen Einsatz der chemischen Rekuperation der Abgaswärme bei Gasturbogruppen mit sequentieller Verbrennung interessant.

### Darstellung der Erfindung

Der vorliegenden Erfindung liegt die Aufgabe zugrunde, bei einer Kraftwerksanlage, bei der die Abgaswärme einer Gasturbogruppe zur Erzeugung von Synthesegas genutzt wird, die Wirkungsgrad- und Leistungspotentiale eines solchen Betriebsverfahrens bestmöglich zu nutzen.

Erfindungsgemäss wird daher vorgeschlagen, ein Verfahren zum Betrieb einer Kraftwerksanlage, welche Kraftwerksanlage wenigstens eine Gasturbogruppe mit wenigstens einer Brennkammer einer höchsten Druckstufe und wenigstens einer Brennkammer wenigstens einer niedrigeren Druckstufe beinhaltet, und bei welchem Verfahren ein Heissgas aus einer Brennkammer einer höheren Druckstufe zunächst in einer Turbine unter Abgabe mechanischer Leistung entspannt und in eine Brennkammer einer niedrigeren Druckstufe eingeleitet wird, wobei ein entspanntes Heissgas der Gasturbogruppe einen Abhitzekessel durchströmt, in welchem Abhitzekessel eine Dampfmenge erzeugt wird, diese Dampfmenge in einen im Abhitzekessel eingebauten Reaktor eingeleitet wird, in welchen Reaktor weiterhin eine Menge eines kohlenwasserstoffhaltigen Rohbrennstoffes eingeleitet wird, und wobei in dem Reaktor aus der Dampfmenge und dem Rohbrennstoff ein wenigstens teilweise aus Synthesegas bestehendes Reaktorgas erzeugt wird, welches Reaktorgas wenigstens teilweise in wenigstens einer Brennkammer der Gasturbogruppe verbrannt wird, so auszuführen, dass das Synthesegas wenigstens zu einem überwiegenden Teil in eine Brennkammer einer möglichst hohen Druckstufe eingebracht und dort verbrannt wird. Brennkammern niedrigerer Druckstufen werden bevorzugt unmittelbar mit dem Rohbrennstoff gefeuert.

Kern der Erfindung ist also, bei einer Kraftwerksanlage mit einem Abhitzekessel den Abhitzekessel zunächst auf an sich bekannte Art als Reaktor zur Erzeugung von Synthesegas auszuführen. Moderne Gasturbogruppen mit sequentieller Verbrennung, die wenigstens zwei bei unterschiedlichen Drücken arbeitende Brennkammern aufweisen, sind aufgrund der hohen erzielbaren Abgastemperaturen besonders gut zur Erzeugung von Synthesegas in einem Abhitzekessel geeignet. Im Abhitzekessel wird Dampf erzeugt, und in einem vom Abgas beheizten Reaktor mit einem kohlenwasserstoffhaltigen Rohbrennstoff zusammengebracht. Dort entsteht ein Reaktorgas, das bei hinreichend hoher Reaktortemperatur im wesentlichen aus Wasserstoff, Kohlendioxid, Kohlenmonoxid, und nicht zur Synthesegaserzeugung verbrauchtem Wasserdampf, sowie, wenn die Reaktortemperatur vergleichsweise niedrig ist, aus nicht umgewandeltem Rohbrennstoff besteht, wobei der inerte Wasserdampf eine Ballastkomponente des Reaktorgases darstellt. In einer Gasturbogruppe mit sequentieller Verbrennung wird das Reaktorgas erfindungsgemäss wenigstens zu einem grossen Teil in die Brennkammer der höchsten Druckstufe eingebracht, sofern die Gasmenge dort umsetzbar ist. Brennkammern niedrigerer Druckstufen werden bevorzugt unmittelbar mit einem Rohbrennstoff betrieben, der nicht zwangsläufig mit dem dem Reaktor zur Synthesegaserzeugung zugeführten Rohbrennstoff identisch sein muss, aus praktischen Überlegungen in der Mehrzahl der Fälle aber wird. Die gesamte erzeugte Reaktorgasmenge wird bevorzugt in die Brennkammer höchsten Druckes eingebracht und dort verbrannt, solange die Produktionsrate des Reaktorgases die in der Brennkammer höchsten Druckes verwertbare Gasmenge nicht überschreitet. Auf diese Weise wird das Reaktorgas bei möglichst hohem Druck in den Arbeitsprozess der Gasturbogruppe eingebracht. Der Wirkungsgrad einer erfindungsgemäss betriebenen Kraftwerksanlage mit chemischer Rekuperation der Abgaswärme übersteigt den einer Kraftwerksanlage mit Dampfeindüsung bei weitem, und kommt recht nahe an den einer apparativ wesentlich aufwendigeren Kombianlage heran.

Eine Wirkungsgradoptimierung einer chemisch rekuperierten Gasturbogruppe mit sequentieller Verbrennung wird also dann erreicht, wenn das erzeugte Reaktorgas bei möglichst vollständiger Ausnutzung der Abgaswärme soweit als irgend möglich in der Brennkammer der höchsten Druckstufe verbrannt wird. Wenn als Rohbrennstoff beispielsweise Methan - oder Erdgas mit einem hohen Methangehalt - verwendet wird, erweist es sich hierzu als günstig, das variierbare Massenverhältnis von Wasserdampf und Rohbrennstoff möglichst auf einen Wert von 5 Teilen Dampf auf einen Teil Methan einzustellen. Wenn die Heissgastemperatur in der Brennkammer der höchsten Druckstufe einen bestimmten Grenzwert, der beispielsweise durch die zulässigen Materialtemperaturen der Komponenten im Heissgaspfad oder durch das Betriebskonzept der Gasturbinenanlage gegeben ist, erreicht, ist kein weiterer Brennstoff in der Brennkammer der höchsten Druckstufe verwertbar. Über die in der Brennkammer der höchsten Druckstufe verwertbare Menge hinaus erzeugtes Reaktorgas wird in eine Brennkammer einer niedrigeren Druckstufe, bevorzugt in eine Brennkammer der nächstniedrigeren Druckstufe, eingebracht und dort verbrannt. Somit werden in einem weiteren Betriebszustand die Brennkammern der beiden höchsten Druckstufen mit Reaktorgas betrieben, und zwar die Brennkammer der höchsten Druckstufe ausschliesslich oder zu einem ganz überwiegenden Teil, und die Brennkammer der zweithöchsten Druckstufe zu dem Anteil, der durch die Reaktorgasproduktion zu decken ist und zum Rest mit Rohbrennstoff, während gegebenenfalls weitere Brennkammern niedrigerer Druckstufen zum wirkungsgradoptimalen Betrieb zumindest ganz überwiegend mit dem Rohbrennstoff betrieben werden. Reaktorgas, welches auch in der Brennkammer der zweithöchsten Druckstufe nicht mehr verwertbar ist, kann, so vorhanden, in einer Brennkammer einer dritthöchsten Druckstufe verwertet werden. Auf diese Weise wird eine steigende Reaktorgasproduktion stufenweise bei immer niedrigerem Druck dem Arbeitsprozess der Gasturbinenanlage zugeführt, und es wird immer ein maximaler Anteil des erzeugten Reaktorgases auf den höchsten Druckstufen verwendet. Der Verwendbarkeit des Reaktorgases zum Betrieb der Gasturbogruppe sind selbstverständlich Grenzen gesetzt. Wenn insgesamt mehr Reaktorgas erzeugt wird, als bei einer gegebenen Leistung der Kraftwerksanlage in den Brennkammern der Gasturbogruppe verbrannt werden kann, so kann überschüssiges Reaktorgas auch zum Betrieb anderer Feuerungsanlagen genutzt werden. Diese Option sollte jedoch im Sinne des eigentlichen Erfindungsgedankens tatsächlich nur dann genutzt werden, wenn eine durch die Abgaswärme ermöglichte hohe Reaktorgasproduktion tatsächlich nicht mehr innerhalb des eigentlichen Arbeitsprozesses der Gasturbogruppe genutzt werden kann. Der beste Wirkungsgrad der Kraftwerksanlage wird tatsächlich dann erreicht, wenn das bei voller Ausnutzung der Abgaswärme produzierte Reaktorgas vollständig in der Brennkammer der höchsten Druckstufe verbrannt werden kann, worin primär auch die Lehre der vorliegenden Erfindung zu sehen ist. Alle beschriebenen Umleitungen von Reaktorgas in niedrigere Druckstufen sind als nachrangig zu betrachten, und im Interesse der Wirkungsgradoptimierung ist stets eine möglichst vollständige Umsetzung des erzeugten Reaktorgases in der Brennkammer der höchsten Druckstufe anzustreben.

Diese Prozessführung ist ebenfalls aus reaktionskinetischen Gründen zu bevorzugen. Bei einer Gasturbogruppe mit sequentieller Verbrennung ergibt sich üblicherweise die grösste Temperaturerhöhung in der ersten Brennkammer, also in der Brennkammer höchsten Druckes. Aus der hohen Wärmefreisetzungsrate resultiert ein hohes Potenzial zur Stickoxidbildung. Bei der Verbrennung des niederkalorischen Reaktorgases mit hohen Ballastanteilen werden lokale Temperaturspitzen wirkungsvoll unterbunden, was zu einer stickoxidarmen Verbrennung führt. Ein hoher Wasserstoffanteil im Synthesegasanteil des Reaktorgases trägt hierbei ganz entscheidend zur Stabilisierung der vergleichweise kühlen Flamme bei. In den Brennkammern niedrigerer Druckstufen hingegen wird das Arbeitsmedium nur nacherhitzt. Aufgrund der vergleichweise geringen Temperaturerhöhung ist die Stickoxidbildung in diesen Brennkammern ohnehin gering. Zudem werden solche Brennkammern oft als selbstzündende Brennkammern ausgelegt. Das heisst, dass die Zündwilligkeit des verwendeten Brennstoffes hoch genug sein muss, damit eine spontane Selbstzündung des Brennstoffs im Heissgas erfolgt. Mit niederkalorischem Reaktorgas mit hohen Anteilen an Kohlenmonoxid und inerten Gasen ist dies nicht ohne weiteres gewährleistet; hier muss unter Umständen mittels eines zündwilligen Brennstoffs wie Dieselöl eine Pilotflamme generiert werden, um eine zuverlässige Selbstzündung des Reaktorgases zu gewährleisten.

Das erfindungsgemässe Betriebsverfahren zeigt gerade auch dann Vorteile, wenn aus Gründen der Verfügbarkeit die Kraftwerksanlage mit flüssigen Rohbrennstoffen zu betreiben ist. Es ist bekannt, dass beim Betrieb mit Flüssigbrennstoffen die Stickoxidproduktion ohne entsprechende Massnahmen wesentlich grösser ist als beim Betrieb mit gasförmigen Brennstoffen. Es erweist sich dabei als vorteilhaft, einen Teil des Rohbrennstoffes zu Synthesegas aufzubereiten, welches in der Brennkammer der höchsten Druckstufe als ausschliesslicher Brennstoff verbrannt wird. Auf diese Weise wird in der Brennkammer der höchsten Druckstufe, welche bei den heute real eingesetzten Gasturbogruppen mit sequentieller Verbrennung den höchsten thermischen Leistungsumsatz bei Temperaturerhöhungen jenseits der 700°C aufweisen, wie oben beschrieben ein niederkalorischer gasförmiger Brennstoff verbrannt, mit den beschriebenen positiven Auswirkungen auf die Stickoxidbildung. Eine Brennkammer einer niedrigeren Druckstufe wird vergleichweise wesentlich niedriger gefeuert; die Temperaturerhöhungen beschränken sich auf beispielsweise 200°C. Aufgrund des deutlich geringeren thermischen Leistungsumsatzes ist die Neigung zur Oxidation des Luftstickstoffs gering, weshalb auch bei einer Feuerung mit Flüssigbrennstoff keine derart hohen Produktionsraten an Luftschadstoffen auftreten. Überdies ist gerade in einer selbstzündenden sequentiellen Brennkammer der wohlbekannten Bauart der Einsatz von zündwilligen Brennstoffen wie Dieselöl von Vorteil. Bei einem erfindungsgemässen Betriebsverfahren kann also eine Kraftwerksanlage mit einem einzigen Rohbrennstoff betrieben werden, und gleichwohl werden an unterschiedlichen Stellen Brennstoffe der jeweils geeigneten Art eingesetzt. Gerade für die vorangehend beschriebene Betriebsart ist es von grossem Nutzen, wenn, wie unten beschrieben, eine Zusatzfeuerung im Abhitzekessel betrieben wird, um im gesamten Betriebsbereich eine hinreichende Synthese von Reaktorgas aus dem Flüssigbrennstoff zu gewährleisten. In diesem Falle nämlich ist der Rohbrennstoff unter allen Umständen zu 100% in Synthesegas umzusetzen.

Zusammenfassend muss festgestellt werden, dass aus thermodynamischen wie reaktionskinetischen Überlegungen heraus eine möglichst vollständige Verwertung des Reaktorgases in der Brennkammer der höchsten Druckstufe, im Normalfall der ersten Brennkammer, einer Gasturbogruppe mit sequentieller Verbrennung zu bevorzugen ist.

Im Teillastbetrieb und insbesondere beim Anfahren einer chemisch rekuperierten Gasturbogruppe werden Betriebszustände auftreten, in denen die zur Verfügung stehende Abgaswärme nicht ausreicht, um eine zum Betrieb der Brennkammer des höchsten Druckes ausreichende Reaktorgasmenge mit einem angestrebten Synthesegasgehalt zu erzeugen. In diesem Fall muss die Brennkammer höchsten Druckes zumindest teilweise unmittelbar mit dem Rohbrennstoff befeuert werden. Bei steigender Synthesegasproduktion wird der Rohbrennstoff sukzessive durch Synthesegas ersetzt. Weiterhin ist festzuhalten, dass für die Reaktorgasproduktion nicht nur die insgesamt zur Verfügung stehende Wärmemenge aus der Abgaswärme entscheidend ist, sondern für die Erzeugung von Synthesegasauch eine Mindesttemperatur erforderlich ist. Daher wird zur Durchführung des erfindungsgemässen Verfahrens mit Vorteil eine Gasturbogruppe eingesetzt, die über wenigstens eine verstellbare Reihe von Verdichterschaufeln verfügt, insbesondere über eine verstellbare Vorleitreihe. Durch die Verstellung der Verdichterbeschaufelung kann der Massenstrom des Arbeitsmediums der Gasturbogruppe in einem gewissen Bereich variiert werden, und somit auch die Abgastemperatur beim Austritt aus der Gasturbine und beim Eintritt in den Abhitzekessel. Bei der Durchführung des erfindungsgemässen Verfahrens können verstellbare Verdichterschaufeln so verwendet werden, um die Abgastemperatur im Teillastbetrieb auf einen Zielwert einzuregeln, so, dass bereits bei niedriger Last der Kraftwerksanlage eine bestimmte, der Synthesegasproduktion förderliche Abgastemperatur erreicht wird.

Die anzustrebende Reaktortemperatur und damit die anzustrebende Temperatur des Abgases beim Eintritt in den Abhitzekessel werden vom angestrebten Grad der Umwandlung des Rohbrennstoffes in Synthesegas bestimmt. In Synthesegasreaktoren, die nach dem Stand der Technik üblich sind, wird eine weitgehende Umwandlung beispielsweise von Methan erst bei Temperaturen jenseits von ca. 850°C erzielt. Derart hohe Temperaturen im Abgas einer Gasturbogruppe würden allerdings zu erheblichen Festigkeitsproblemen im Bereich der letzten Turbinenlaufreihen führen. Wird also eine möglichst vollständige Umwandlung des Rohbrennstoffs in Synthesegas angestrebt - beispielsweise bei dem oben beschriebenen Betriebsverfahren mit Dieselöl als Rohbrennstoff -, wird der Einsatz einer Zusatzfeuerung im Abgasweg stromauf des Abhitzekessels notwendig, um die Reaktortemperatur anzuheben. Auch wenn eine Zusatzfeuerung zu leichten Einbussen beim Wirkungsgrad der Gesamtanlage führen kann, kann dies durch betriebstechnische Vorteile mehr als wettgemacht werden. Wie oben beschrieben, kann die Zusatzfeuerung gerade beim Start und im unteren Teillastbereich der Kraftwerksanlage erhebliche Vorteile bieten, kann doch unabhängig von der Abgastemperatur der Gasturbine eine bestimmte Reaktortemperatur gewährleistet werden. Die Zusatzfeuerung kann weiterhin genutzt werden um insbesondere in transienten Betriebszuständen mit Schwankungen der Abgastemperatur eine schnell reagierende Regelung der Reaktortemperatur durchzuführen.

Wenn die Zusatzfeuerung beim Start der Kraftwerksanlage, also noch beim Stillstand der Gasturbogruppe oder sehr geringer Drehzahl, eingesetzt betrieben wird, ist es notwendig, Luft in den Abgastrakt der Gasturbine stromauf der Zusatzfeuerung einzubringen. Hierzu wird beim Start der Kraftwerksanlage eine Zusatzluftklappe geöffnet, und ein Zusatzluftgebläse fördert Umgebungsluft zu der Zusatzfeuerung, und von dort in den Abhitzekessel.

Die Wirkungsgradoptimierung der Gesamtanlage bedingt selbstverständlich eine möglichst vollständige Ausnutzung der Abgaswärme. Das Abgas soll also beim Austritt aus dem Abhitzekessel auf eine untere Grenztemperatur abgekühlt sein, die beispielsweise durch den Taupunkt von Abgaskomponenten bestimmt ist. Zur Einstellung der Abgas-Endtemperatur auf diesen Zielwert erweist sich insbesondere eine Variation der im Abhitzekessel erzeugten Dampfmenge als geeignet. Hierbei ist es besonders von Vorteil, dass der Ballast- also insbesondere Wasserdampfgehalt des erzeugten Reaktorgases in weiten Bereichen variiert werden kann, und vergleichsweise hohe Werte erreichen darf. So ist es durchaus möglich, beispielsweise beim Einsatz von Methan als Rohbrennstoff dem Reaktor die vier- oder gar fünffachche Menge an Wasserdampf zuzuführen, wenn dies im Interesse einer möglichst guten Ausnutzung der Abgaswärme ist. Anders ausgedrückt, kann die Nutzung der Abgaswärme einerseits durch eine Steuerung der Menge des erzeugten Reaktorgases beeinflusst werden, und andererseits durch eine Steuerung der Reaktorgasqualität. Weiterhin ist es selbstverständlich auch möglich, einen Teil des im Abhitzekessels erzeugten Dampfes nicht zur Reaktorgaserzeugung zu nutzen, sondern ihn anderen Verbrauchern zuzuführen. So kann überschüssiger Dampf an geeigneter Stelle in den Gasturbinenprozess eingeleitet werden, zur Kühlung thermisch hochbelasteter Komponenten der Gasturbogruppe verwendet werden, oder er könnte gar in einer Dampfturbine genutzt werden.

Die oben beschriebene Variation der dem Reaktor zugeführten Dampfmenge zur Menge des Rohbrennstoffes und die Möglichkeit, über die Reaktortemperatur die Umsetzungsrate des Rohbrennstoffes in Synthesegas zu beeinflussen, eröffnen weitgehende Möglichkeiten Brennstoffparameter wie den Heizwert oder die Flammenfrontgeschwindigkeit des Reaktorgases bei Bedarf gezielt einzustellen.

Die Ausführungen zeigen, dass das erfindungsgemässe Verfahren eine ganze Reihe konkreter Ausführungen zulässt. Die Auswahl einer bestimmten Variante wird in der Praxis in hohem Ausmasse von der angestrebten Betriebsart und vom vorhandenen Rohbrennstoff abhängen, und ebenso durch von der einzusetzenden Gasturbogruppe vorgegebenen thermodynamischen Randbedingungen. Der allen Varianten gemeinsam zugrundeliegende Erfindungsgedanke ist, das Reaktorgas im Interesse einer maximalen Exergieausnutzung möglichst vollständig in einer Brennkammer einer höchsten Druckstufe zu verfeuern.

### Kurze Beschreibung der Zeichnung

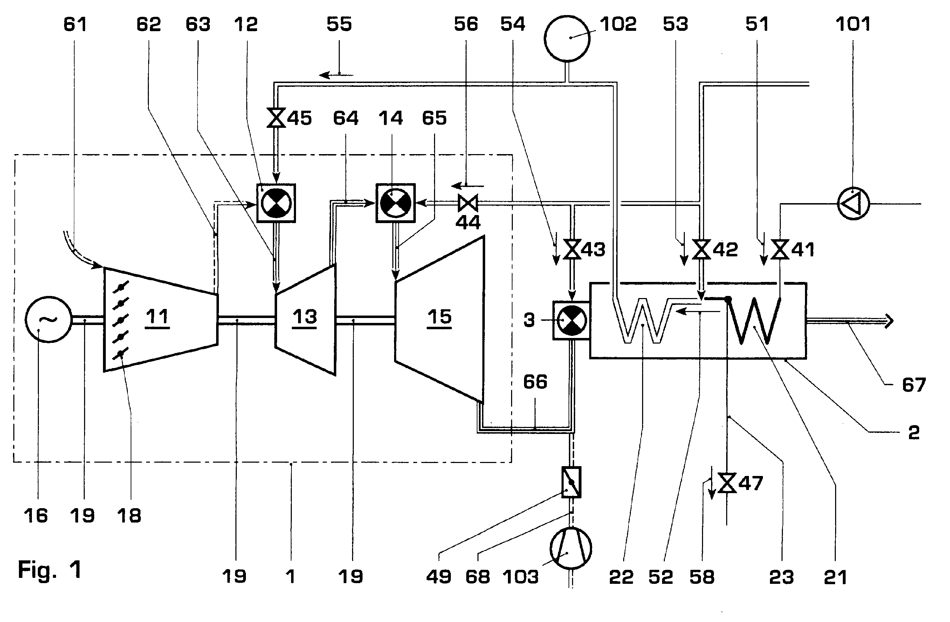

Die Erfindung wird nachfolgend anhand der Zeichnung erläutert. Die Figuren 1 bis 3 zeigen Kraftwerksanlagen mit je einer Gasturbogruppe und einem Abhitzekessel, die sich in Details unterscheiden, und die zur Durchführung unterschiedlicher Vorzugsvarianten des erfindungsgemässen Verfahrens geeignet sind.

### Weg zur Ausführung der Erfindung

Figur 1 zeigt eine Gasturbogruppe 1 mit sequentieller Verbrennung, wie sie an sich beispielsweise aus der EP 0 620 362 bekannt ist, welche Schrift einen integrierenden Bestandteil der vorliegenden Beschreibung darstellt. Ein Verdichter 11, eine erste Turbine 13, eine zweite Turbine 15 und ein Generator 16 sind auf einer gemeinsamen Welle 19 angeordnet. Der Verdichter 11 saugt eine Luftmenge 61 aus der Umgebung an, und verdichtet diese Luftmenge auf einen hohen Druck. Verdichtete Verbrennungsluft 62 strömt aus dem Verdichter 11 in eine Brennkammer einer höchsten Druckstufe 12 ein. Dort wird der Luft ein Brennstoff zugemischt und verbrannt. Aus dieser ersten Brennkammer strömt ein Heissgas 63 in eine erste Turbine 13 ein und wird teilweise entspannt. Die Turbine 3 ist beispielsweise für ein Druckverhältnis im Bereich von 1.5 oder 2 ausgelegt. Teilentspanntes Arbeitsmedium 64 mit einer immer noch sehr hohen Temperatur strömt in eine zweite Brennkammer 14 einer niedrigeren Druckstufe ein. Dort wird weiterer Brennstoff zugeführt und verbrannt, und das Arbeitsmedium wird nochmals erhitzt. Dieses nacherhitzte Heissgas 65 einer niedrigeren Druckstufe strömt in eine zweite Turbine 15 ein und wird dort näherungsweise auf Umgebungsdruck entspannt. Gerade dann, wenn die zweite Brennkammer 14 in Betrieb ist, befindet sich das entspannte Arbeitsmedium 66, welches aus der Turbine 15 ausströmt, immer noch auf einer sehr hohen Temperatur. Diese Abgaswärme wird in einem Abhitzekessel 2 genutzt. An einem stromaufwärtigen Ende des Abhitzekessels 2 ist im Beispiel eine Zusatzfeuerung 3 angeordnet. Das Abgas 67, das aus dem Abhitzekessel abströmt, befindet sich auf einer möglichst niedrigen Temperatur, damit die Abgaswärme maximal genutzt wird. In der Praxis ist die Temperatur des Abgases 67 beim Austritt aus dem Abhitzekessel 2 nach unten durch Faktoren wie den Taupunkt von Abgaskomponenten beschränkt. Durch diese Faktoren ergibt sich ein Zielwert für die Temperatur des Abgases am Austritt aus dem Abhitzekessel. Innerhalb des Abhitzekessels sind ein Dampferzeuger 21 und ein Reaktor 22 angeordnet. Dabei befindet sich der Dampferzeuger 21 im kalten, also in Strömungsrichtung des Abgases stromabwärtigen, Teil des Abhitzekessels 2, während der Reaktor 22 im heissen stromaufwärtigen Teil angeordnet ist. Eine Speisepumpe 101 fördert eine Speisewassermenge 51 über ein Regelorgan 41 in den Dampferzeuger 21. Dabei wird die Speisewassermenge 51 bevorzugt so geregelt, dass die Temperatur des Abgases 67 beim Austritt aus dem Abhitzekessel 2 dem Zielwert entspricht. Eine Menge überhitzten Dampfes 52 wird dem Reaktor 22 zugeführt; weiterhin kann ein Teilstrom 58 des Dampfes, über die Anzapfdampfleitung 23 und das Anzapfdampfstellorgan 47 aus dem Dampferzeuger 21 entnommen werden. Diese Dampfmenge kann beispielsweise an einer geeigneten Stelle in das Arbeitsmedium der Gasturbogruppe eingebracht werden, sie könnte auf an sich wohlbekannte Weise zur Kühlung thermisch hochbelasteter Komponenten der Gasturbogruppe Verwendung finden, oder auch für andere Zweche verwendet werden, so als Prozess- oder Heizdampf oder in einer Dampfturbine. Dem Reaktor wird weiterhin eine Menge 53 eines kohlenwasserstoffhaltigen Rohbrennstoffs, zum Beispiel Methan, Erdgas, oder Dieselöl, zugeführt. Die Menge 53 wird entsprechend dem Bedarf durch das Stellorgan 42 eingestellt. Dampf und Rohbrennstoff werden in dem Reaktor 22 vermischt, und bei hinreichend hoher Reaktortemperatur wird auf an sich bekannte Weise ein Reaktorgas mit einem bestimmten Synthesegasgehalt erzeugt. Die erzeugte Reaktorgasmenge 55 wird bei der in Figur 1 dargestellten Kraftwerksanlage vollständig in der Brennkammer 12 der höchsten Druckstufe verfeuert, wobei die gefeuerte Reaktorgasmenge über das Stellorgan 45 eingestellt wird. Die Leistungsregelung der Gasturbogruppe führt zu kurzzeitigen kleineren Schwankungen des Gasbedarfs der Brennkammer 12, welche nicht unmittelbar in dem Reaktor nachvollzogen werden können. Die Produktionsrate des Reaktorgases wird durch eine Variation der dem Reaktor zugeführten Rohbrennstoffmenge 53 mittels des Stellorgans 42 jeweils an den Brennstoffbedarf der Brennkammer der höchsten Druckstufe angepasst. Aufgrund der vergleichweise langen Strömungswege und der Regelungsmechanismen kann die Produktionsrate des Reaktorgases transienten Schwankungen des Brennstoffbedarfs nicht immer unmittelbar folgen. Ein Ausgleichsbehälter 102 dient daher als Zwischenspeicher für Reaktorgas. Bei hoher Last der Gasturbogruppe wird neben der Brennkammer 12 auch die Brennkammer 14 gefeuert, und zwar mit einer Menge an Rohbrennstoff 56, die über das Stellorgan 44 beeinflusst wird. Im Teillastbetrieb der Gasturbogruppe wird die Stellung einer verstellbaren Vorleitreihe 18 und damit der Massenstrom des Arbeitsmediums der Gasturbogruppe so eingeregelt, dass, dass bereits bei vergleichsweise geringer Last ein hoher Zielwert der Abgastemperatur erreicht wird, bei dem die Abgaswärme effizient im Abhitzekessel genutzt wird. Für eine gewisse Umwandlungsrate von Rohbrennstoff 53 und Wasserdampf 52 im Reaktor 22 ist eine bestimmte Temperatur des Reaktors erforderlich, die mitunter über der Abgastemperatur liegt. Hierfür ist in Strömungsrichtung des Abgases gesehen stromauf des Abhitzekessels eine Zusatzfeuerung 3 angeordnet. Über ein Stellorgan 43 wird die dieser zugeführte Menge an Brennstoff 54 so eingeregelt, dass die gewünschte Reaktortemperatur erreicht wird. Die Zusatzfeuerung ist ebenfalls wichtig, um die Gasturbogruppe unmittelbar mit Reaktorgas zu starten. Im Stillstand des Gasturbosatzes, oder bei niedriger Drehzahl, wenn kein oder nur sehr wenig Fluid von der Gasturbogruppe durch den Abhitzekessel gefördert wird, wird eine Zusatzluftklappe 49 geöffnet. Ein Zusatzluftgebläse 103 fördert zum Start der Kraftwerksanlage eine Zusatzluftmenge 68 in den Abgastrakt der Gasturbogruppe, und von dort durch die Zusatzfeuerung und den Abhitzekessel. Der Vorgang, mit dem die dargestellte Kraftwerksanlage angefahren wird, könnte beispielsweise so aussehen: Die Gasturbogruppe wird zunächst mit Hilfe einer Startvorrichtung für einige Minuten zum Kesselspülen auf eine bestimmte Drehzahl gefahren, bis ein Mehrfaches des Volumens des gesamten Abgastraktes der Gasturbogruppe inklusive des Kessels durch die Gasturbogruppe gefördert wurde. Danach kann das Stellorgan 43 geöffnet, und die Zusatzfeuerung 3 gezündet werden. In einem nächsten Schritt wird das Zusatzluftgebläse 103 in Betrieb genommen, und die Zusatzluftklappe 49 geöffnet. Durch das Zusatzluftgebläse 103 wird der den Abhitzekessel durchströmende Massenstrom von der Drehzahl der Gasturbopgruppe unabhängig. Im Zusammenspiel mit der Regelung der Brennstoffmenge 54, die der Zusatzfeuerung 3 zugeführt wird, werden die Bedingungen im Abhitzekessel so geregelt, dass die Reaktortemperatur hinreichend hoch ist, um ein Reaktorgas mit einem bestimmten Gehalt an Synthesegas zu erzeugen, und der Massenstrom des in der Zusatzfeuerung erzeugten Heissgases hinreichend ist, um die zum Start der Gasturbine notwendige Reaktorgasproduktionsrate zu erreichen. Der Dampferzeuger und der Reaktor werden dabei von Dampf durchströmt, der entweder in die Brennkammer 12 eingebracht oder über ein nicht dargestelltes Ventil abgeblasen wird. Wenn die notwendige Reaktortemperatur erreicht ist, wird das Regelorgan 42 geöffnet, und die Synthesegasproduktion läuft an. Für einen Moment kann das erzeugte Reaktorgas im Ausgleichbehälter 102 zwischengespeichert werden. Alternativ könnte das erste erzeugte Reaktorgas auch über eine hier nicht dargestellte Vorrichtung zur Zusatzfeuerung geführt und dort verbrannt werden. Parallel hierzu wird die Gasturbogruppe auf ihre Zünddrehzahl gefahren, und das Stellorgan 45 wird geöffnet. Reaktorgas 55 strömt aus dem Reaktor 22 in die Brennkammer 12 ein, und die Zündsequenz der Brennkammer 12 wird gestartet. Daraufhin wird die Gasturbogruppe auf bekannte Weise auf Nenndrehzahl gefahren, synchronisiert, und belastet. Wenn der durch die Gasturbogruppe geförderte Massenstrom für den Betrieb des Abhitzekessels ausreicht, wird die Zusatzluftklappe 49 geschlossen, und das Zusatzluftgebläse 103 abgeschaltet. Die Zusatzfeuerung 3 wird fakultativ über den gesamten Betriebsbereich verwendet, um die im Abhitzekessel nutzbare thermische Leistung hoch genug zu halten, um eine hinreichende Menge an Reaktorgas mit einem bestimmten Gehalt an Synthesegas zu produzieren, die für den Betrieb der Brennkammer 12 ausreicht, und andererseits, um die Reaktortemperatur auf einem für einen angestrebten Umwandlungsgrad des Rohbrennstoffs notwendigen Mindestwert zu halten. Bei der in Fig. 1 dargestellten Schaltung muss die Reaktorgasproduktion so eingestellt werden, dass sie im Mittel genau der in der Brennkammer 12 der höchsten Druckstufe verwertbaren Menge entspricht. Kurzzeitige Schwankungen werden durch den Behälter 102 und eine variable Reaktorgaszusammensetzung ausgeglichen. Die Speisewassermenge 51 wird so eingeregelt, dass die Temperatur des Abgases 67 beim Austritt aus dem Abhitzekessel wie oben beschrieben einem unteren Grenzwert entspricht, um eine möglichst vollständige Ausnutzung der Abgaswärme zu erreichen. Gerade, wenn auch bei hoher Last die Kraftwerksanlage mit der Zusatzfeuerung betrieben wird, besteht die Möglichkeit, dass nicht der gesamte so erzeugte Dampfmassenstrom zur Reaktorgaserzeugung genutzt werden kann, weil der Ballastgehalt des Brennstoffes zu gross würde, oder weil die erste Turbine 13 bei einem maximalen Druckverhältnis des Verdichters den resultierenden Massenstrom sonst nicht mehr durchsetzen kann. Überschüssiger Dampf wird über eine Anzapfdampfleitung 23 entnommen. Die dort entnommene Dampfmenge 58 wird beispielsweise an einer anderen geeigneten Stelle in das Arbeitsmedium der Gasturbogruppe eingebracht, kann aber auch in einer Dampfturbine oder als Prozessdampf und dergleichen mehr Verwendung finden. Das vorangehend beschriebene Verfahren eignet sich auch sehr gut, um Flüssigbrennstoffe als Rohbrennstoff zu verfeuern.

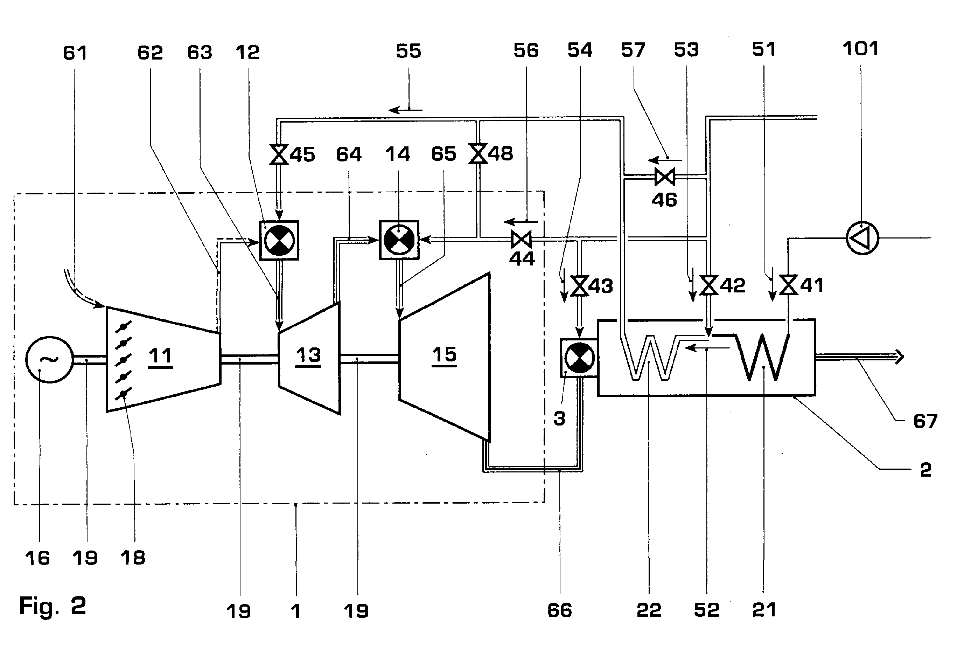

In einer anderen bevorzugten Ausführungsform, die in Fig. 2 gezeigt ist, wird die erste Brennkammer mit Rohbrennstoff gestartet. Weiterhin ist eine grössere Menge an Reaktorgas verwertbar. Über ein Bypassventil 46 kann eine Menge 57 an Rohbrennstoff unter Umgehung des Reaktors 22 unmittelbar in die Reaktorgasleitung eingebracht werden. Weiterhin kann ein Teil des Reaktorgases über ein Stellorgan 48 in eine Brennkammer 14 einer niedrigeren Druckstufe eingeleitet werden. Beim Start der Kraftwerksanlage sind beim Zünden der Gasturbogruppe die Stellorgane 41, 42, 43, 48 und 44 geschlossen. Über die Stellorgane 46 und 45 wird der Brennkammer 12 der höchsten Druckstufe eine zum Zünden notwendige Brennstoffmenge zugeführt. Sobald ein heisses Abgas 66 in den Abhitzekessel 2 einströmt, wird das Stellorgan 41 geöffnet, und die Speisepumpe 101 liefert eine Speisewassermenge 51 in den Kessel, die ausreicht, um eine Überhitzung der Wärmetauscherrohre im Abhitzekessel zu vermeiden. Die erzeugte Dampfmenge wird mit der Rohbrennstoffmenge 57 vermischt, und der Brennkammer 12 zugeführt. Wo dies bei niedriger Last zu Problemen mit der Flammenstabilität führt, kann der Dampf auch über eine hier nicht dargestellte geeignete Vorrichtung ausgeblasen werden. Die Gasturbogruppe 1 wird auf Nenndrehzahl beschleunigt, synchronisiert, und langsam belastet. Die Vorleitreihe 18 des Verdichters 11 ist geschlossen, und minimiert die angesaugte Luftmenge 61. Damit wird für eine gegebene Last die Temperatur des entspannten Arbeitsmediums 66 maximiert, um möglichst schnell eine zur Synthesegaserzeugung taugliche Temperatur des Reaktors 22 zu erreichen. Dies kann unterstützt werden, indem der Zusatzfeuerung 3 über das Stellorgan 43 eine Brennstoffmenge 54 zugeführt wird. Die Brennstoffmenge 54 wird dabei je nach Betriebskonzept so gesteuert, dass eine bestimmte Reaktortemperatur, eine Reaktormindesttemperatur, eine Mindesttemperatur an einer bestimmten Stelle innerhalb des Abhitzekessels oder ähnliches eingestellt wird. Wie ein solches Betriebskonzept im Einzelfall gewählt wird, hängt unter anderem von Wärmebilanzen, bestimmten Eckdaten der Gasturbogruppe, oder dem Rohbrennstoff ab. Zur beginnenden Reaktorgaserzeugung wird das Regelorgan 42 geöffnet und das Regelorgan 46 wird sukzessive geschlossen, und die gesamte Brennstoffmenge besteht zu einem steigenden Teil aus Reaktorgas. Das Stellorgan 46 wird schliesslich nur noch eingesetzt, um kurzzeitige Schankungen des Brennstoffbedarfs durch Zumischen von Rohbrennstoff 57 zum Reaktorgas 55 auszugleichen. An einem bestimmten Lastpunkt erreicht die Temperatur des Heissgases 63 beim Austritt aus der Brennkammer 12 einen zulässigen Maximalwert. Zur weiteren Leistungssteigerung wird einer Brennkammer 14 einer niedrigeren Druckstufe über das Stellorgan 44 ein Rohbrennstoff 56 zugeführt, und das teilentspannte Arbeitsmedium 64 wird nacherhitzt. Die Temperatur des entspannten Arbeitsmediums 66 steigt, und erreicht einen maximal zulässigen Wert. Daraufhin öffnet die Vorleitreihe 18, und erhöht die Ansaugluftmenge 61. Über den Massenstrom des Arbeitsmediums regelt die Vorleitreihe 18 die Temperatur des entspannten Arbeitsmediums 66 auf einen zulässigen Maximalwert, um möglichst wenig im der Zusatzfeuerung 3 zufeuern zu müssen. Bei der Ausführungsform mit Zusatzfeuerung kann allerdings auch schon bei geringer Last der Massenstrom durch den Abhitzedampferzeuger maximiert werden, was, wie oben kurz beschrieben, eine Frage des gewählten Betriebskonzeptes ist. Mit steigender Leistung der Gasturbogruppe steigt die im Abhitzekessel verwertbare thermische Leistung, womit auch die Produktionsrate an Reaktorgas steigt. Solange die Reaktorgasmenge 55 in der Brennkammer 12 der höchsten Druckstufe verwertbar ist, bleibt das Stellorgan 48 geschlossen. Erst, wenn mehr Reaktorgas erzeugt wird, wird das Stellorgan 48 geöffnet, und der übersteigende Teil des Reaktorgases wird in der Brennkammer 14 der nächstniedrigeren Druckstufe verwertet.

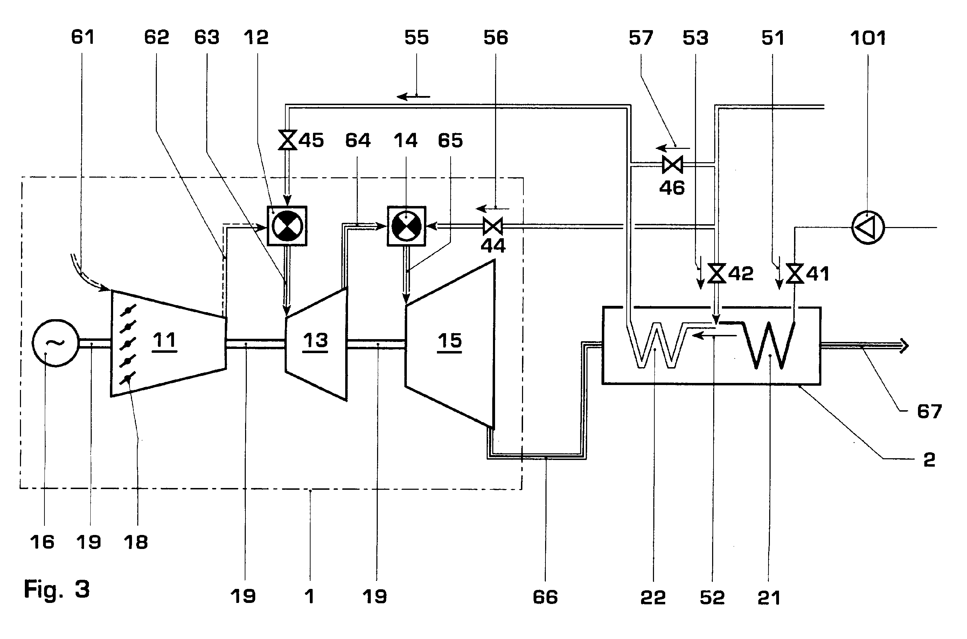

Eine apparativ besonders einfache Kraftwerksanlage zur Durchführung des Erfindungsgemässen Verfahrens ist in Fig. 3 dargestellt. Auf eine Zusatzfeuerung wird hier verzichtet. Der gesamte Brennstoffbedarf der Brennkammer 12 der höchsten Druckstufe wird über das Stellorgan 45 geregelt. In Abhängigkeit von der erzielbaren Reaktorgasproduktion leitet des Stellorgan 42 eine Menge 53 an Rohbrennstoff in den Reaktor 2. Falls die den Reaktor durchströmende Gasmenge nicht zum Betrieb der Brennkammer 12 ausreicht, regelt das Stellorgan 46 eine Brennstoffmenge 57, die unter Umgehung des Reaktors in die Brennkammer 12 eingebracht wird, so ein, dass die Gesamtmenge 55 dem Bedarf der Brennkammer 12 entspricht.

Wenn eine Brennkammer wie es bei den in den Figuren 2 und 3 dargestellten Beispielen der Fall ist, mit Brennstoffen stark unterschiedlichen Heizwertes und zu betreiben ist, kann dies zu Problemen führen. Dies umgeht das Beispiel aus Fig. 1, da die Brennkammer der höchsten Druckstufe ausschliesslich mit Reaktorgas, die Brennkammer der niedrigeren Druckstufen ausschliesslich mit Rohbrennstoff betrieben wird.

Wie anhand der Ausführungsbeispiels zu erkennen, ermöglicht die erfindungsgemässe Betriebsart einer chemisch rekuperierten Gasturbine eine grosse Anzahl an Verfahrensvarianten. Die in den dargestellten Beispielen aufgezeigten spezifischen Varianten können auch in vollkommen anderer Weise als dargestellt miteinander kombiniert werden. Es wird Aufgabe des Fachmanns sein, unter Zuhilfenahme seines Fachwissens, bei einem bestimmten angestrebten Wirkungsgrad, des Kostenrahmens, der zur Verfügung stehenden Komponenten, und einer Reihe weiterer projektspezifischer Faktoren die sinnvollen Kombinationen zu ermitteln, und eine spezifisch am besten geeignete zu wählen. Entscheidend und erfindungswesentlich ist, dass zur Maximierung des Wirkungsgrades das erzeugte Reaktorgas möglichst vollständig in einer Brennkammer einer höchsten Druckstufe verbrannt wird. Wenn die erzeugte Reaktorgasmenge die in der Brennkammer der höchsten Druckstufe verwertbare Menge überschreitet, wird das Reaktorgas in eine Brennkammer einer nächstniedrigeren Druckstufe eingebracht. Auf diese Weise wird das erzeugte Reaktorgas immer bei maximalem Druck in das Arbeitsmediums des Gasturbinenprozesses eingebracht, was unter gegebenen Randbedingungen zu einer maximalen Nutzung der Enthalpieströme führt.

### Bezugszeichenliste

- 1: Gasturbogruppe
- 2: Abhitzekessel
- 3: Zusatzfeuerung
- 11: Verdichter
- 12: Brennkammer der höchsten Druckstufe
- 13: Turbine
- 14: Brennkammer einer niedrigeren Druckstufe
- 15: Turbine
- 16: Generator
- 18: verstellbare Verdichterbeschaufelung, Vorleitreihe
- 19: Welle
- 21: Dampferzeuger und -überhitzer
- 22: Reaktor
- 23: Anzapfdampfleitung
- 41: Stellorgan
- 42: Stellorgan
- 43: Stellorgan
- 44: Stellorgan
- 45: Stellorgan
- 46: Stellorgan
- 47: Stellorgan
- 48: Stellorgan
- 49: Zusatzluftklappe
- 51: Speisewasser
- 52: Dampf
- 53: Rohbrennstoff zum Reaktor
- 54: Rohbrennstoff zur Zusatzfeuerung
- 55: Reaktorgas
- 56: Rohbrennstoff zur Brennkammer der niedrigeren Druckstufe
- 57: Rohbrennstoff zur Brennkammer der höchsten Druckstufe
- 58: Anzapfdampfmenge
- 61: angesaugte Umgebungsluft
- 62: verdichtete Verbrennungsluft
- 63: Heissgas
- 64: teilentspanntes Heissgas
- 65: nacherhitztes Heissgas
- 66: Abgas, entspanntes Arbeitsmedium
- 67: abgekühltes Abgas
- 68: Zusatzluft
- 101: Speisewasserpumpe
- 102: Behälter
- 103: Zusatzluftgebläse

## Patentansprüche

1. Verfahren zum Betrieb einer Kraftwerksanlage, welche Kraftwerksanlage wenigstens eine Gasturbogruppe (1) mit wenigstens einer Brennkammer (12) einer höchsten Druckstufe und wenigstens einer Brennkammer (14) wenigstens einer niedrigeren Druckstufe beinhaltet, und bei welchem Verfahren ein Heissgas (63) aus einer Brennkammer einer höheren Druckstufe zunächst in einer Turbine (13) unter Abgabe mechanischer Leistung entspannt und in eine Brennkammer einer niedrigeren Druckstufe eingeleitet wird, wobei ein entspanntes Heissgas (66) der Gasturbogruppe einen Abhitzekessel (2) durchströmt, in welchem Abhitzekessel eine Dampfmenge (52) erzeugt wird, diese Dampfmenge in einen im Abhitzekessel eingebauten Reaktor (22) eingeleitet wird, in welchen Reaktor weiterhin eine Menge (53) eines kohlenwasserstoffhaltigen Rohbrennstoffes eingeleitet wird, und wobei in dem Reaktor aus der Dampfmenge (52) und dem Rohbrennstoff (53) ein wenigstens teilweise aus Synthesegas bestehendes Reaktorgas (55) erzeugt wird, welches Reaktorgas wenigstens teilweise in wenigstens einer Brennkammer der Gasturbogruppe verbrannt wird, dadurch gekennzeichnet, dass das Reaktorgas wenigstens zu einem überwiegenden Teil in eine Brennkammer einer möglichst hohen Druckstufe eingebracht und dort verbrannt wird.

2. Verfahren nach Anspruch 1, dadurch gekennzeichnet, dass einem teilentspannten Heissgas (64) in wenigstens einer Brennkammer (14) einer niedrigeren Druckstufe zusätzliche Wärme zugeführt wird, und dass diese Brennkammern niedrigerer Druckstufen wenigstens teilweise mit dem Rohbrennstoff betrieben werden.

3. Verfahren nach Anspruch 2, dadurch gekennzeichnet, dass die Brennkammern niedrigerer Druckstufen wenigstens nahezu ausschliesslich unmittelbar mit dem Rohbrennstoff betrieben werden.

4. Verfahren nach Anspruch 1, dadurch gekennzeichnet, dass bei einer Produktionsrate von Reaktorgas, die niedriger ist als der Brennstoffbedarf der Brennkammer (12) der höchsten Druckstufe, die Brennkammer der höchsten Druckstufe mit Reaktorgas (55) und mit Rohbrennstoff (57) betrieben wird, dass der überwiegende Teil des Reaktorgases der Brennkammer der höchsten Druckstufe zugeführt wird, dass die Brennkammern (14) niedrigerer Druckstufen überwiegend mit dem Rohbrennstoff (56) betrieben werden, und dass bei einer steigenden Produktionsrate von Reaktorgas der Rohbrennstoff (57), welcher der Brennkammer der höchsten Druckstufe zugeführt wird, durch Reaktorgas ersetzt wird.

5. Verfahren nach Anspruch 1, dadurch gekennzeichnet, dass bei einer Produktionsrate von Reaktorgas, die grösser ist als der Brennstoffbedarf der Brennkammer (12) der höchsten Druckstufe, die Menge an Reaktorgas, die nicht in der Brennkammer der höchsten Druckstufe verwertbar ist, in die Brennkammer (14) der nächstniedrigeren Druckstufe eingeleitet und dort verbrannt wird.

6. Verfahren nach Anspruch 5, dadurch gekennzeichnet, dass bei einer weiter erhöhten Produktionsrate von Reaktorgas die Menge an Reaktorgas, die nicht in einer Brennkammer einer bestimmten Druckstufe oder einer höheren Druckstufe verwertbar ist, in eine Brennkammer einer nächstniedrigeren Druckstufe eingeleitet und dort verbrannt wird.

7. Verfahren nach Anspruch 1, dadurch gekennzeichnet, dass das Verhältnis der dem Reaktor zugeführten Dampfmenge (52) zu der dem Reaktor zugeführten Menge an Rohbrennstoff (53) so gewählt wird, dass die Temperatur des Abgases (67) beim Austritt aus dem Abhitzekessel einem Zielwert entspricht.

8. Verfahren nach Anspruch 1, dadurch gekennzeichnet, dass eine dem Abhitzekessel (2) zugeführte Speisewassermenge (51) so gewählt wird, dass die Temperatur des Abgases (67) beim Austritt aus dem Abhitzekessel einem Zielwert entspricht, dass die dem Reaktor (22 zugeführte Dampfmenge (52) so gewählt wird, dass die Produktionsrate des Reaktorgases der in der Brennkammer (12) der höchsten Druckstufe verwertbaren Brennstoffmenge entspricht, und dass eine übersteigende Dampfmenge (58) dem Abhitzekessel entnommen wird.

9. Verfahren nach Anspruch 8, dadurch gekennzeichnet, dass die übersteigende Dampfmenge einer Dampfturbine zugeführt wird.

10. Verfahren nach Anspruch 8, dadurch gekennzeichnet, dass die übersteigende Dampfmenge an einer Stelle geeigneten Druckes in den Arbeitsprozess der Gasturbine eingeleitet wird.

11. Verfahren nach Anspruch 8, dadurch gekennzeichnet, dass eine übersteigende Dampfmenge zur Kühlung thermisch hochbelasteter Komponenten der Gasturbogruppe verwendet wird.

12. Verfahren nach Anspruch 1, dadurch gekennzeichnet, dass im Teillastbetrieb der Gasturbogruppe (1) ein Massenstrom eines Arbeitsmediums mittels verstellbarer Verdichterschaufelreihen (18) so eingestellt wird, dass die Temperatur des entspannten Arbeitsmediums (66) beim Eintritt in den Abhitzekessel (2) näherungsweise einem oberen Grenzwert entspricht.

13. Verfahren nach Anspruch 1, dadurch gekennzeichnet, dass dem Abgas mittels einer Zusatzfeuerung (3) in einem erforderlichen Ausmass Wärme zugeführt wird, wie es zur Sicherstellung einer gewünschten Zusammensetzung und Produktionsrate des Reaktorgases notwendig ist.

14. Verfahren nach Anspruch 13, dadurch gekennzeichnet, dass die Zusatzfeuerung zum Start der Gasturbogruppe betrieben wird.

15. Verfahren nach Anspruch 14, dadurch gekennzeichnet, dass zum Start eine Zusatzluftklappe (49) geöffnet wird, und ein Zusatzluftgebläse (103) stromauf des Abhitzekessels (2) eine Luftmenge (68) in den Abgasweg einbringt.

16. Verfahren nach Anspruch 13, dadurch gekennzeichnet, dass die Temperatur des Reaktors mittels der Zusatzfeuerung auf einen Sollwert geregelt wird.
